# NEUE EUROPÄISCHE PATENTSCHRIFT

(11) **EP 1 971 502 B2**
(45) Veröffentlichungstag und Bekanntmachung des Hinweises auf die Entscheidung über den Einspruch: **11.05.2016**
(45) Hinweis auf die Patenterteilung: 04.12.2013
(21) Anmeldenummer: 07702612.8
(22) Anmeldetag: 08.01.2007
(51) Int. Cl.: B60K 15/03

(54) **BEHÄLTER FÜR BETRIEBSSTOFFE VON KRAFTFAHRZEUGEN**
CONTAINER FOR OPERATING MEDIA OF MOTOR VEHICLES
RESERVOIR POUR CARBURANTS DE VEHICULE AUTOMOBILE

(30) Priorität: 10.01.2006 DE 102006001428; 15.11.2006 DE 102006054208
(43) Veröffentlichungstag der Anmeldung: 24.09.2008
(60) Teilanmeldung: 10168759.8
(73) Patentinhaber: MAGNA STEYR Fuel Systems GmbH Werk Schwäbisch Gmünd, 73529 Schwäbisch-Gmünd (DE)
(72) Erfinder: KÖGEL, Alexander, 89077 Ulm (DE)
(74) Vertreter: Rausch, Gabriele
(86) Internationale Anmeldenummer: PCT/EP2007/000089
(87) Internationale Veröffentlichungsnummer: WO 2007/080078

(56) Entgegenhaltungen:
- EP-A1- 1 350 654
- EP-A2- 1 561 626
- WO-A-91/09732
- WO-A1-2006/068616
- DE-A1- 10 256 727
- DE-A1- 19 841 770
- DE-A1- 19 930 347
- DE-U1- 20 314 249
- DE-U1-202006 002 035
- GB-A- 2 390 582
- US-A1- 5 567 296
- US-A1- 2003 209 550

## Beschreibung

Die Erfindung betrifft einen Behälter für Betriebsstoffe von Kraftfahrzeugen. Derartige Behälter, insbesondere Kraftstoffbehälter, finden sich üblicherweise als Anbauteile z. B. bei Nutzfahrzeugen, wo sie oftmals als genietete oder geschweißte, alternativ als Kunststoffbehälter realisiert sind. Gerade im Nutzfahrzeugbereich entstand jedoch in den letzten Jahren - bedingt durch wachsende Anforderungen an die Umweltverträglichkeit derartiger Fahrzeuge - ein Bedarf an Behältern für Betriebsstoffe, deren Funktion über die eines konventionellen Kraftstofftanks o. ä. hinausgeht. So wurde es beispielsweise in jüngerer Zeit erforderlich, im Rahmen der Maßnahmen zur Entstickung von Dieselabgasen Harnstoff im Abgassystem von Nutzfahrzeugen einzusetzen. Damit entstand ein Bedarf an Tanks, die zum Mitführen des benötigten, chemisch aggressiven Harnstoffs geeignet sind.

Zwar ist in dem US-Patent US 5,567,296 ein KunststoffFahrzeugtank nach dem Oberbegriff des Anspruchs 1 gezeigt, der auch metallisch beschichtet sein kann, jedoch zeigt dieser Tank keine besonderen Vorkehrungen zum Mitführen von Kraftstoffen und Additiven.

Der vorliegenden Erfindung liegt daher die Aufgabe zugrunde, einen Behälter für Betriebsstoffe von Kraftfahrzeugen anzugeben, der chemisch stabil sowohl gegenüber dem mitgeführten Kraftstoff als auch gegenüber Additiven ist.

Erfindungsgemäß wird diese Aufgabe dadurch gelöst, dass der Behälter für die Betriebsstoffe von Kraftfahrzeugen in der Weise realisiert wird, dass er eine Tragstruktur aufweist und die Innenseite der Tragstruktur mindestens teilweise mit einer Kunststoff-Sinterschicht bedeckt ist. Dabei kann die Tragstruktur aus einem vergleichsweise steifen Material, wie beispielsweise einem Metall, gefertigt sein, auf der die dünne Kunststoff-Sinterschicht aufgebracht ist.

Weiterhin weist der Behälter einen ersten Teilbehälter auf, dessen Innenseite mindestens teilweise mit einer Kunststoff-Sinterschicht bedeckt ist. An diesen ersten Teilbehälter schließt sich mindestens ein zweiter Teilbehälter an, der gegenüber dem ersten Teilbehälter abgeschlossen ausgebildet ist. Die beiden Teilbehälter sind mittels einer Schweißnaht mit einander verbunden, wobei die Schweißnaht entlang einer Auskragung an dem ersten Teilbehälter in einem Abstand von 0 mm bis 3000 mm verläuft.

Dabei kann es sich bei dem ersten Teilbehälter insbesondere um einen Harnstoffbehälter handeln, der an den als Kraftstoffbehälter ausgebildeten zweiten Teilbehälter angeschweißt ist. Die oben genannte Auskragung des ersten Teilbehälters hat dabei die Wirkung, dass die Schweißnaht, mittels derer die beiden Behälter mit einander verbunden werden, von dem innenbeschichteten ersten Teilbehälter einen hinreichend großen Abstand aufweist, um ein Aufschmelzen und damit eine Schädigung der Kunststoff-Sinterschicht im Inneren des ersten Teilbehälters während des Schweißvorganges zu vermeiden. Für eine Ausführung der beiden Behälter aus Aluminium mit ca. 2 mm Wandstärke hat sich ein Abstand der Schweißnaht von ca. 150 mm von dem ersten Teilbehälter als vorteilhaft erwiesen; abhängig von der verwendeten Schweißtechnologie sind Abstände von 0 bis 3000, insbesondere von 0 bis 1000 mm denkbar.

Die Kunststoff-Sinterschicht kann beispielsweise dadurch geschaffen werden, dass nach der Ausformung der Tragstruktur der Behälter insgesamt erhitzt wird und nachfolgend ein Kunststoffpulver in seinen Innenraum eingebracht wird, wo es an der heißen Tragstruktur aufschmilzt und damitdie genannte Schicht bildet.

Ein Vorteil dieser Anordnung besteht darin, dass aufgrund der durch die Wahl des Materials bedingten Steifigkeit der Tragstruktur diese dünn gewählt werden kann und auch die Kunststoff-Sinterschicht als Schicht von geringer Dicke ihre Funktion in ausreichendem Maße ausfüllt. Darüber hinaus ergibt sich gegenüber konventionellen Lösungen, bei denen ein fertiger Kunststoffbehälter in eine äußere stabilisierende Hülle eingebracht wird, der Vorteil, dass der Innenraum der äußeren Hülle, im vorliegenden Fall also der Tragstruktur des Behälters, wesentlich besser ausgenutzt werden kann. Insgesamt stellt der vorgeschlagene Behälter eine steife und dabei leichte Struktur dar.

Hinzu kommt, dass es die vorgeschlagene Lösung ermöglich, nahezu vollständig auf zusätzliche Vorrichtungen zur Fixierung des Kunststoffes an der Innenseite der Tragstruktur zu verzichten, da bereits durch den Sinterprozess eine feste Verbindung hergestellt wird.

Auf diese Weise können insbesondere Kraftstoffbehälter für Kraftfahrzeuge wie auch Behälter fürfluide oder nicht fluide Kraft- oder Betriebsstoffe wie Hydraulikflüssigkeit, Biodiesel oder Harnstoff geschaffen werden. Ein Vorteil der Kunststoffbeschichtung der Behälterinnenseite besteht dabei darin, dass die Kunststoffschicht üblicherweise chemisch inert ist, d. h. dass sie durch den im Behälter aufbewahrten Betriebsstoff nicht angegriffen wird. Damit wird dem verbreiteten Problem des Auslösens von Metall, insbesondere von Aluminiumionen, aus der Aluminiumtragstruktur des Behälters durch den teilweise aggressiven Betriebsstoff wie insbesondere Harnstoff wirkungsvoll begegnet.

Das direkte Aufsintern der Kunststoff-Sinterschicht hat darüber hinaus erhebliche produktionstechnische Vorteile. Da die Tragstruktur selbst als Sinterwerkzeug verwendet wird, lassen sich nahezu beliebige Behälterformen auch für kleine Stückzahlen mit geringem Aufwand realisieren, so dass die erfindungsgemäßen Behälteran verschiedenste Rahmengeometrien beispielsweise für Sonderfahrzeuge auf einfache Weise angepasst werden können.

Ferner schafft die erfindungsgemäße Lösung eine einfache Möglichkeit, integrierte Mehrfach-, insbesondere Doppelbehälter zu realisieren. Die Integration der Behälter innerhalb einer Tragstruktur hat dabei den Vorteil, dass nicht jeder Teil behälter fürs ich mittels zweier oder mehrerer Konsolen am Fahrzeugrahmen befestigtwerden muss, sondern dass der integrierte Behälter als Ganzes mit lediglich zwei Konsolen an einem Fahrzeugrahmen angebracht werden kann.

Die Kunststoff-Sinterschicht im Inneren des Behälters kann mechanisch beispielsweise dadurch weiter stabilisiert werden, dass der Behälter an seiner Innenseite-gegebenenfalls bedingt durch den Fertigungsprozess - eine oder mehrere Hinterschneidungen aufweist. Die genannten Hinterschneidungen haben dabei den Effekt, dass sie eine zusätzliche mechanische Stabilisierung der Kunststoff-Sinterschicht bewirken, so dass einAblösen der Kunststoff-Sinterschicht von der Innenseite der Tragstruktur wirkungsvoll unterbunden wird. Dies führt dazu, dass die Kunststoff-Sinterschicht dünner gewählt werden kann, als es ohne Hinterschneidungen möglich wäre; im Ergebnis lässt sich auf diese Weise eine weitere Gewichtseinsparung realisieren.

Die Hinterschneidungen können insbesondere als Nebeneffekt bei der Herstellung der Struktur des Behälters realisiert werden: Bei einem aus mehreren Segmenten zusammengesetzten Behälter ergeben sich die erforderlichen Hinterschneidungen quasi automatisch an den z. B. genieteten oder auch mittels beispielsweise einer Orbitalnaht geschweißten Fügestellen. Darüber hinaus lassen sich die Hinterschneidungen auch dadurch verwirklichen, dass Durchtrittsöffnungen durch die Tragstruktur miteinergeeigneten Geometrie ausgebildet werden. Unter Durchtrittsöffnungen sind dabei insbesondere die Öffnung für den Tankstutzen oder eine Öffnung für das Einbringen eines Füllstandssensors in den Tank zu verstehen. Die Hinterschneidung kann auf einfache Weise durch einen umlaufenden, von der Innenseite der Tragstruktur beabstandeten Flansch oder durch eine Rippenstruktur gebildet werden. Darüber hinaus ist es denkbar, einen sich in Richtung des Innenraumes des Behälters bspw. konisch erweiternden Stutzen vorzusehen, wodurch ein Abziehen der Kunststoff-Sinterschicht nach innen ebenfalls wirksam erschwert wird.

Eine weitere Maßnahme zur Verbesserung der Haftung zwischen Kunststoff-Sinterschicht und der Innenseite der Tragstruktur kann insbesondere dadurch erreicht werden, dass zwischen die Kunststoff-Sinterschicht und die Innenseite der Tragstruktur eine zusätzliche Haftschicht eingebracht wird. Auf diese Weise kann die zur mechanischen Stabilität der Kunststoff-Sinterschicht notwendige Schichtdicke weiter reduziert werden.

Eine vorteilhafte Wahl für die Kunststoff-Sinterschicht besteht in einem Hochdruck-Polyäthylen, das die erforderliche chemische Inertheit gegenüber den mitzuführenden Betriebsstoffen aufweist; als Dicke der Sinterschicht haben sich ca. 1-25 mm, insbesondere ca. 2 bis 3 mm bzw. 5 bis 10 mm bewährt.

Ein mögliches Verfahren zur Herstellung des genannten Behälters besteht darin, dass zunächst die Tragstruktur aus metallischen Einzelteilen zusammengefüge, beispielsweise geschweißt wird. Nachfolgend wird die so zusammengefügte Struktur erhitzt und das Kunststoff-Sintermaterial wird in den Innenraum der Tragstruktur eingebracht, wo es sich an der Innenseite der Tragstruktur niederschlägt, aufschmilzt und somitdie gewünschte Kunststoff-Sinterschicht bildet.

Um eine gleichmäßige Verteilung des Kunststoff-Sintermaterials im Innenraum des Behälters zu erreichen, kann der Behälter während des Sinterprozesses in Bewegung, insbesondere in Rotation gehalten werden.

Als Zwischenschritt nach dem Erhitzen der Tragstruktur und vor-Einbringen des Kunststoff-Sintermaterials hat es sich bewährt, eine zusätzliche Haftschicht auf die Innenseite der Tragstruktur aufzubringen. Alternativ kann die Haftschicht auch bereits auf die Einzelsegmente vor dem Zusammenfügen der Tragstruktur aufgebracht werden. Ebenso ist es denkbar, z. B. bei genieteten Behältern, auch die Kunststoff-Sinterschicht bereits vor dem Zusammenfügen der Tragstruktur aufzubringen; d. h. im wesentlichen, in dem vorstehend genannten Verfahren den ersten Schritt, nämlich das Zusammenfügen der Einzelsegmente, an das Ende des Prozesses zu verlegen. Insbesondere bei genieteten Tragstrukturen bietet sich diese Vorgehensweise an, da in diesem Fall die bereits beschichtete Struktur nicht hoch einmal erhitzt werden muss, wie es beispielsweise bei einem Zusammenfügen des Behälters durch Schweißen der Fall wäre.

In den Fällen, in denen die Kunststoff-Sinterschicht nach Zusammenfügen der Tragstruktur in den Behälter eingebracht wird, empfiehlt es sich, das Kunststoffmaterial durch eine ohnehin vorgesehene Öffnung der Tragstruktur, wie beispielsweise den Einfüllstutzen, einzubringen. Es ist ebenso denkbar, das Kunststoffmaterial durch eine weitere Öffnung in den Innenraum des Behälters einzubringen.

Als vorteilhafter Temperaturbereich zum Aufsintern der Kunststoff-Sinterschicht hat sich der Bereich von ca. 160 bis 200 °C bewährt.

Der Behälter weist ferner ein Einschubelement auf, das sich durch die Tragstruktur hindurch in den Innenraum des Behälters erstreckt, wobei das Einschubelement mindestens teilweise von der Kunststoff-Sinterschicht bedeckt ist. Bei dem Einschubelement handelt es sich um einen Füllstandssensor, beispielsweise um einen kapazitiven oder mechanischen Füllstandssensor, ein Heizelement oder ein kombiniertes Element aus Füllstandssensor und Heizelement. Ein derartiges Einschubelement kann insbesondere zur Beheizung eines als Harnstoffbehälters ausgebildeten ersten Teilbehälters verwendet werden. Die Heizung kann dabei als elektrische Widerstandsheizung oder auch als Kühlwasserheizung realisiert werden.

Eine Problematik der Verwendung eines Einschubelementes in Harnstoffbehältern besteht darin, dass derartige Einschubelemente in den Fällen, in denen sich bei niedrigen Temperaturen des Harnstoffes feste Kristalle bilden, erhebliche mechanische Belastungen des Einschubelementes auftreten, die zu einer Verbiegung oder im Extremfall zu einer Zerstörung des Einschubelementes führen. Dieser Gefahr kann dadurch wirksam begegnet werden, dass im Bereich des dem Innenraum des Behälters zugewandten Endes des Einschubelementes, insbesondere in einem Abstand von ca. 5-10 mm von dem Einschubelement, eine Hilfsstruktur angeordnet ist, durch die einer Positionsveränderung oder einer Verformung des Einschubelementes entgegengewirkt wird.

Der genannte Abstand der Hilfsstruktur von dem Einschubelement führt dazu, dass bei dem im normalen Fahrbetrieb auftretenden Schwingungen kein Schlagen des Einschubelementes an der Hilfsstruktur auftritt; die Hilfsstruktur unterbindet lediglich zu große Deformationen oder Positionsveränderungen des Einschubelementes.

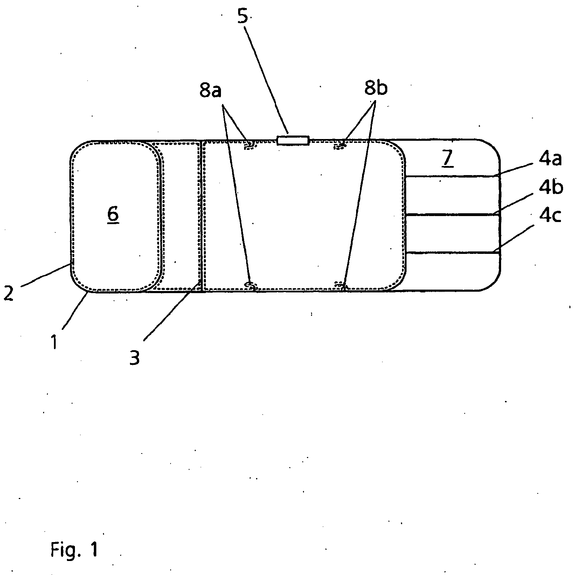

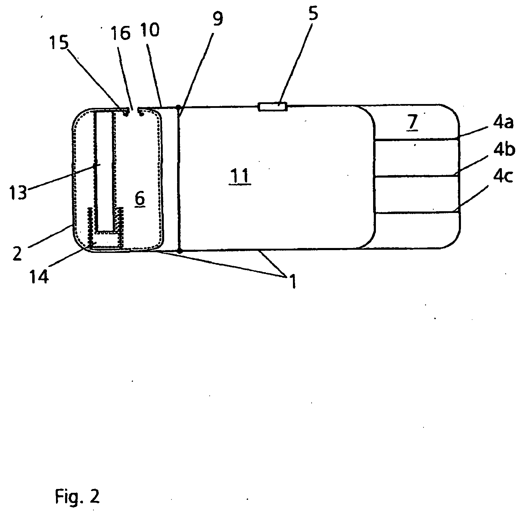

Nachfolgend wird ein Ausführungsbeispiel der Erfindung anhand der Figuren 1 und 2 prinzipmäßig beschrieben.

Fig. 1 zeigt in einer hier nicht beanspruchten Ausführungsform einen Kraftstoffbehälter für Nutzfahrzeuge mit einer Tragstruktur 1 und einer auf der Innenseite der Tragstruktur 1 aufgebrachten Kunststoff-Sinterschicht 2 sowie einem Einfüllstutzen 5. Die Kunststoff-Sinterschicht 2 weist dabei eine Dicke von ca. 2 bis 3 mm auf. Sie bedeckt im vorliegenden Ausführungsbeispiel die gesamte Innenoberfläche des Fahrzeugtanks, insbesondere auch die Oberfläche der Schwallwand 3 und des als separaten Behälter ausgebildeten Harnstoffbehälters 6.

Durch die umlaufenden Hinterschneidungen 8a und 8b, die ebenfalls von der Kunststoff-Sinterschicht 2 bedeckt sind, wird diese zusätzlich mechanisch stabilisiert und an der Innenseite der Tragstruktur 1 festgehalten. In einem zusätzlichen Segment 7 des Kraftstoffbehälters sind die Trittstufen 4a, 4b, 4c ausgebildet.

Figur 2 zeigt einen erfindungsgemäßen Behälter, wobei der Behälter die beiden Teilbehälter 6 und 11 aufweist, die miteinander mittels der umlaufenden Schweißnaht 9 verbunden sind. Dabei handelt es sich bei dem Teilbehälter 6 um einen Harnstoffbehälter mit einer Kunststoff-Sinterschicht 2. Bei dem Teilbehälter 11 handelt es sich um einen Kraftstoffbehälter, bei dem ein Kunststoff-Innenbeschichtung nicht erforderlich ist. Der Teilbehälter 11 weist ferner einen Einfüllstutzen 5 auf. Die umlaufende Schweißnaht 9 ist von dem innenbeschichteten Teilbehälter 6 mittels der Auskragung 10 um ca. 150 mm beabstandet ausgebildet, so dass ein Verschweißen der Tragstrukturen 1 der beiden Teilbehälter 6 und 11 ohne Gefährdung der Kunststoff-Sinterschicht 2 erfolgen kann. Auf diese Weise wird die Produktion des erfindungsgemäßen Behälters wesentlich vereinfacht.

Auch in diesem Ausführungsbeispiel sind in einem zusätzlichen Segment 7 des Teilbehälters 11 die Trittstufen 4a, 4b, 4c ausgebildet.

In dem Teilbehälter 6 ist das in der Figur 2 schematisch dargestellte Einschubelement 13 angeordnet, das als Füllstandssensor mit einem integriertem Heizelement ausgebildet ist. Auch das Einschubelement 13 ist - wie auch die Innenseite des Teilbehälters 6 - von der Kunststoff-Sinterschicht 2 bedeckt. Darüber hinaus wird das Einschubelement 13 von der im unteren Bereich des Teilbehälters 6 angeordneten ebenfalls mit der Kunststoff-Sinterschicht 2 bedeckten Hilfsstruktur 14 mechanisch in der Weise stabilisiert, dass die Hilfsstruktur 14 in einem Abstand von wenigen Millimetern von dem Einschubelement 13 angeordnet ist und eine starke Verbiegung oder Positionsänderung des Einschubelementes 13 unterbindet.

Ferner befindet sich im oberen Bereich des Teilbehälters 6 die Durchtrittsöffnung 16, die von dem Einfüllstutzen 15 durchstoßen wird. Die Geometrie des Einfüllstutzens 15 ist dabei so gewählt, dass sich der Einfüllstutzen 15 in Richtung des Inneren des Teilbehälters 6 erweitert. Auf diese Weise wird eine Hinterschneidung geschaffen, durch die der Halt der Kunststoff-Sinterschicht 2 an der Innenseite des Teilbehälters 6 weiter verbessert wird.

## Patentansprüche

1. Behälter für Betriebsstoffe von Kraftfahrzeugen, wobei der Behälter eine Tragstruktur (1) aufweist und die Innenseite der Tragstruktur mindestens teilweisemit einer Kunststoffsinterschicht bedeckt ist, wobei der Behälter einen ersten Teilbehälter (6) aufweist, dessen Innenseite mindestens teilweise mit einer Kunststoff-Sinterschicht (2) bedeckt ist und der Behälter mindestens einen zweiten Teilbehälter (11) aufweist, der gegenüber dem ersten Teilbehälter (6) abgeschlossen ausgebildet ist und der mittels einer entlang einer Auskragung (10) an dem ersten Teilbehälter (6) verlaufenden Schweißnaht gebildet wird, **dadurch gekennzeichnet, dass** die Schweißnaht (9) entlang der Auskragung (10) an dem ersten Teilbehälter (6) in einem Abstand von dem ersten Teilbehälter (6) von maximal 3000mm verläuft und dass der Behälter ein Einschubelement (13) aufweist, das sich durch die Tragstruktur (1) hindurch in den Innenraum des Behälters erstreckt, wobei das Einschubelement (13) ein Füllstandssensor ist und/oder ein Heizelement aufweist, und mindestens teilweise von der Kunststoff-Sinterschicht (2) bedeckt ist.

2. Behälter nach Anspruch 1, **dadurch gekennzeichnet, dass** im Bereich des dem Innenraum des Behälters zugewandten Endes des Einschubelementes (13), insbesondere in einem Abstand von ca. 5 bis 10 mm von dem Einschubelement (13), eine Hilfsstruktur(14) angeordnet ist, durch die einer Positionsveränderung oder einer Verformung des Einschubelementes (13) entgegengewirkt wird.

3. Behälter nach einem der vorangehenden Ansprüche, **dadurch gekennzeichnet, dass** die Schweißnaht (9) entlang der Auskragung (10) an dem ersten Teilbehälter (6) in einem Abstand von dem ersten Teilbehälter (6) von maximal 1000 mm verläuft.

## Claims

1. Container for operating media of motor vehicles, the container having a carrying structure (1) and the inside of the carrying structure being covered at least partially with a plastic sintered layer, the container having a first part container (6), the inside of which is covered at least partially with a plastic sintered layer (2) and the container having at least one second part container (11) which is designed to be closed off with respect to the first part container (6) and which is formed by means of a weld seam running along a projection (10) on the first part container (6), **characterized in that** the weld seam (9) runs along the projection (10) on the first part container (6) at a spacing from the first part container (6) of at most 3000 mm and **in that** the container has a push-in element (13) which extends through the carrying structure (1) into the interior of the container, the push-in element (13) being a filling level sensor and/or having a heating element, and is covered at least partially by the plastic sintered layer (2).

2. Container according to Claim 1, **characterized in that**, in the region of that end of the push-in element (13) facing the interior of the container, in particular at a spacing of approximately 5 to 10 mm from the push-in element (13), an auxiliary structure (14) is arranged, by means of which a variation in position or a deformation of the push-in element (13) is counteracted.

3. Container according to either of the preceding claims, **characterized in that** the weld seam (9) runs along the projection (10) on the first part container (6) at a spacing from the first part container (6) of at most 1000 mm.

## Revendications

1. Réservoir pour carburants de véhicules automobiles, le réservoir présentant une structure porteuse (1) et le côté intérieur de la structure porteuse étant recouvert au moins en partie par une couche frittée en plastique, le réservoir présentant un premier réservoir partiel (6) dont le côté intérieur est recouvert au moins en partie par une couche frittée en plastique (2) et le réservoir présentant au moins un deuxième réservoir partiel (11) qui est réalisé sous forme fermée par rapport au premier réservoir partiel (6) et qui est formé au moyen d'un joint de soudure s'étendant le long d'une saillie (10) sur le premier réservoir partiel (6), **caractérisé en ce que** le joint de soudure (9) s'étend le long de la saillie (10) sur le premier réservoir partiel (6) à une distance du premier réservoir partiel (6) de 3000 mm au maximum et **en ce que** le réservoir présente un élément d'insertion (13) qui s'étend à travers la structure porteuse (1) dans l'espace interne du réservoir, l'élément d'insertion (13) étant un détecteur de niveau de remplissage et/ou présentant un élément chauffant, et étant au moins en partie recouvert par la couche frittée en plastique (2).

2. Réservoir selon la revendication 1,
**caractérisé en ce que**
dans la région de l'extrémité de l'élément d'insertion (13) tournée vers l'espace interne du réservoir, en particulier à une distance d'environ 5 à 10 mm de l'élément d'insertion (13), est disposée une structure auxiliaire (14) qui permet d'agir à l'encontre d'une variation de la position ou d'une déformation de l'élément d'insertion (13).

3. Réservoir selon l'une quelconque des revendications précédentes,
**caractérisé en ce que**
le joint de soudure (9) s'étend le long de la saillie (10) sur le premier réservoir partiel (6) à une distance du premier réservoir partiel (6) de 1000 mm au maximum.
